# EUROPEAN PATENT SPECIFICATION

(11) **EP 3 180 214 B1**
(45) Date of publication and mention of the grant of the patent: **11.11.2020**
(21) Application number: 15774691.8
(22) Date of filing: 11.08.2015
(51) Int. Cl.: B60T 7/20, B60T 8/17, B60T 8/18, B60T 8/32

(54) **HYDRAULIC BRAKING CONTROL SYSTEM FOR AGRICULTURAL VEHICLES OR THE LIKE AND MANUFACTURING METHOD THEREOF**
HYDRAULISCHES BREMSSTEUERUNGSSYSTEM FÜR LANDWIRTSCHAFTLICHE FAHRZEUGE ODER DERGLEICHEN UND HERSTELLUNGSVERFAHREN DAFÜR
SYSTÈME DE COMMANDE DE FREINAGE HYDRAULIQUE POUR VÉHICULES AGRICOLES OU SIMILAIRES ET PROCÉDÉ DE FABRICATION ASSOCIÉ

(30) Priority: 13.08.2014 IT TO20140663
(43) Date of publication of application: 21.06.2017
(73) Proprietor: VHIT S.p.A., 26010 Offanengo (IT)
(72) Inventor: CADEDDU, Leonardo, 26010 Offanengo (CR) (IT)
(74) Representative: Robba, Pierpaolo
(86) International application number: PCT/IB2015/056105
(87) International publication number: WO 2016/024219

(56) References cited:
- EP-A1- 0 650 877
- EP-A1- 1 616 765
- EP-A1- 1 982 897
- EP-A1- 2 093 111
- EP-A2- 0 057 640
- EP-A2- 1 415 878
- WO-A1-2011/029864
- WO-A1-2012/163718
- FR-A- 1 380 403
- FR-A1- 2 371 326

## Description

### Technical field

The present invention generally relates to a hydraulic braking control system for agricultural vehicles or the like, such as agricultural tractors, earth-moving machines, operating machines, etc.

More particularly, the invention relates to a hydraulic braking equipment or system for one such vehicle, which system is equipped with safety functions arranged to act on the braking members of the vehicle.

### Prior Art

As known, in agricultural vehicles, which will be preferably referred to hereinafter for the sake of convenience of the description, two braking pedals are generally provided. Each pedal acts on a respective master cylinder and, if individually actuated, performs braking on a rear wheel of the vehicle located in a position corresponding to the position of the pedal having been actuated. As it can be easily understood, such an individual actuation has the effect of assisting in steering the vehicle, which pivots about the wheel being braked (pivot braking or SBF, Steer-by-Braking Function).

In accordance with the prior art, if the pedals are jointly actuated, braking takes place at least on both rear wheels.

Joint actuation of the pedals is generally achieved by coupling the pedals by means of a suitable lock and by operating on the respective master cylinders connected to the pedals. In this way, actuation of one pedal also actuates the other one and, consequently, both master cylinders, thereby allowing performing braking at least on both rear wheels.

In accordance with the prior art, in vehicles with two pedals and two braking cylinders, the joint actuation of the pedals also allows performing braking on all vehicle wheels, on the front and rear wheels and/or on a trailer, if any.

For instance, document EP 1415878_A2 discloses a hydraulic braking system for earth-moving machines having two braking circuits and two braking pedals.

From document EP 0650877_A1 a braking system for rear wheels of tractors is instead known where a single braking circuit controlled by a single braking pedal is provided.

In accordance with such a prior art, a single pedal is actuatable for obtaining steer-by-braking on one of the two rear wheels of a tractor.

Steer-by-braking is performed with the assistance of devices located on the front wheels of the tractor and arranged to detect whether the front wheels of the tractor have exceeded a given steering radius.

In accordance with the prior art, the determination of the steering radius is independent of the tractor speed so that, in order to avoid steer-by-braking in situations where the front wheels have exceeded a given steering radius but the speed is too high, the braking system necessarily entails the provision of a speed sensor.

From document EP 2093118A1, a device for tractors is known allowing the steer-by-braking function by using a pair of pedals arranged to actuate a single master cylinder. From document EP 2093111_A1, a pedal to be used on tractors for performing steer-by-braking is known.

The pedal disclosed in document EP 2093111_A1 includes two side pads, used for performing steer-by-braking, and a central pad used for performing braking with both rear brakes.

The known pedal requires, in all conditions, the provision of a control circuit interpreting which of the three pads is being used, and of a speed sensor disabling the accidental use of one of the two side pads when a given speed is exceeded.

A first problem of the prior art is that using two pedals either requires the provision of two master cylinders or, in case of a single pedal, two pedals and three pads and a single master cylinder, requires the provision at least of a speed sensor and possibly of an electrical apparatus and a very complex electronic control circuit, the operation of which is necessary in order the braking system can operate.

It is also known that braking on a single wheel is convenient when the vehicle is to move along working ways, such as those envisaged for ploughing fields, moving earth, etc., whereas joint braking on two or four wheels is convenient when the vehicle moves along road stretches or ways.

In general, a problem of the prior art is that the driver of the vehicle, when passing from working ways to road ways, often forgets coupling together the pedals through the lock.

As it can be easily understood, if the pedals are not coupled, should one of the pedals be actuated while the vehicle is moving along a road way, the vehicle will pivot about the braked wheel with a serious danger for both the vehicle driver and other drivers or vehicles present on the road way.

Such a problem is solved in part by document EP 2093118_A1, which however requires that the vehicle electrical system is perfectly operating.

The EP 1 616 765 A1 discloses a futher example of system/method of brake steering for agricultural vehicles. Generally speaking, the Applicant has noticed that the prior art fails effectively and safely solving the problems mentioned above and ensuring safety functions capable of operating both when the electrical system is operating and when it is not operating, while ensuring that the agricultural vehicles can operate, along the working ways, with the braking modalities typical of those vehicles.

### Description of the invention

It is an object of the present invention to obviate the problems mentioned above.

The object is achieved through the hydraulic braking control system for agricultural vehicles or the like as claimed herein.

The present invention also relates to a braking control method for agricultural vehicles or the like.

The claims are integral part of the technical teaching provided herein in respect of the invention.

The following synthetic description of the invention is given in order to provide a basic understanding of some aspects of the invention.

This synthetic description is not an exhaustive description and, as such, it is not to be intended as being suitable for identifying key or critical elements of the invention, or for defining the object of the invention. It only aims at setting forth some concepts of the invention in simplified form, as an anticipation of the detailed description included below.

In accordance with a feature of the present invention, the braking system includes a single brake pump that is actuatable by means of one pedal in order to control the selective braking of at least a right rear brake or a left rear brake.

More particularly, the connection of the pump to the brakes is achieved through valves of normally open type controlled by a control unit.

In accordance with another feature of the present invention, a speed sensor is provided, which is associated with at least one of the rear brakes and is connected to the control unit so that the latter can disable the selective braking when the vehicle speed exceeds a predetermined value.

In accordance with a further feature of the present invention, the pump of the system is actuatable by means of a pair of pads that are articulated on a rocker arm fastened to the pedal so that each pad can actuate the pedal independently of the other pad.

### Brief Description of the Figures

The above and other features and advantages of the invention will become apparent from the following description of preferred embodiments made by way of non limiting example with reference to the accompanying Figures, in which elements denoted by a same or similar reference numeral correspond to components having the same or similar function and construction, and in which:
- Fig. 1 is a diagram of an embodiment of the equipment or system; and
- Fig. 2 schematically shows a detail of the system shown in Fig. 1.

### Detailed Description of a Preferred Embodiment

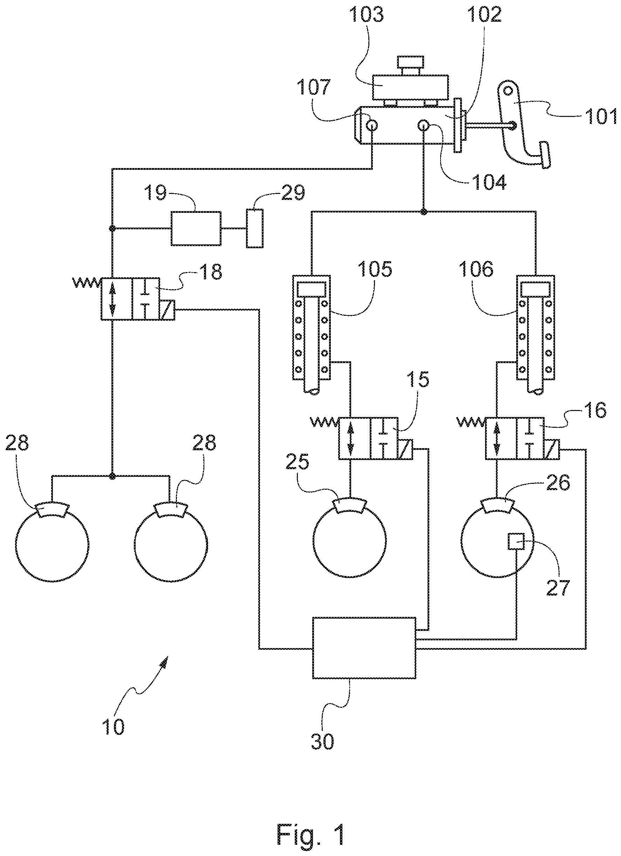

Referring to Fig. 1, a hydraulic braking control equipment or system (system) 10 for agricultural vehicles or the like in accordance with the present invention includes a control pedal (pedal) 101, a brake pump (pump) 102, for instance a tandem pump of known type, a pair of pressure amplifiers (amplifiers) 105 and 106, for instance of the type with differential area and predetermined intervention point, as described for instance in French Patent FR 1380403, a respective pair of hydraulic valves 15 and 16, for instance electrically controlled valves, and a pair of respective rear brakes 25 and 26 of the type with hydraulic control.

Pedal 101 is arranged to operate pump 102, which is connected, through a main outlet or first outlet 104 and a branch, to each of the two amplifiers 105 and 106, respectively. Each amplifier 105 and 106 has its outlet connected to a respective hydraulic valve (electrically controlled valve) 15 and 16, which in the preferred embodiment is of the normally open type and allows independently controlling left and right rear brakes 25 and 26, respectively, depending on commands transmitted to electrically controlled valves 15 and 16 by an electronic control unit (control unit) 30.

In accordance with the embodiment shown in Fig. 1, pump 102 also has a second outlet 107 arranged to control a pair of front brakes 28 and a trailer brake 29.

In accordance with such an embodiment, outlet 107 is connected to both a front brake valve 18, for instance of the normally open type and preferably electrically controlled by control unit 30, and a trailer brake valve 19, of known type.

Front brake valve 18 allows fluidically connecting pump 102 to left and right front brakes 28, under the control of control unit 30.

In accordance with other embodiments, for instance when front brakes are not provided, the second outlet can be dispensed with and connection to trailer brake valve 19 can take place through the first outlet 104.

In such case, pump 102 is not a tandem pump, but a single-circuit pump, known per se.

In accordance with yet other embodiments, the pair of front brakes 28, if it is provided, can also be controlled through a logic unit (logic head), of known type, located downstream electrically controlled valves 15 and 16 controlling the left and right rear brakes 25 and 26. In this case the brake pump is, for instance, a known single-circuit pump.

Of course, in other embodiments, system 10 may lack the front brakes and the trailer brake.

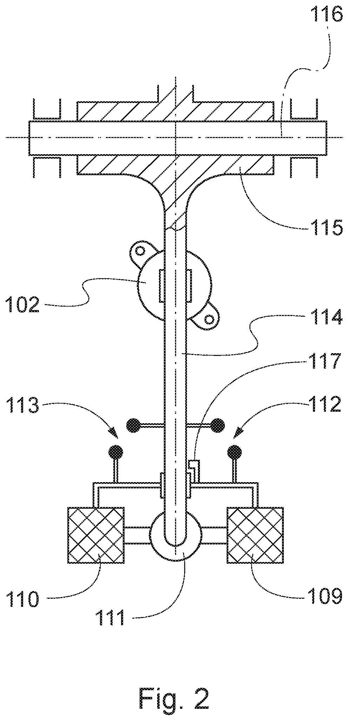

In accordance with the preferred embodiment, pedal 101 includes a pedal body 114 (Fig. 1 and Fig. 2) ending with an articulation bushing 115 articulated on an axis 116. Preferably, pedal 101 is driven by two pads, a right pad 109 and a left pad 110, respectively, articulated on a rocker arm 111 fastened to pedal body 114.

Each of the right and left pads, if individually actuated, is arranged to operate a respective right or left switch 112 or 113, connected to control unit 30.

Preferably, each pad 109 and 110, if actuated, besides operating the respective switch 112 or 113, rests on a pad stop arranged to make the pad integral with body 114 of pedal 101, so as to actuate the pedal itself.

Operation of right or left switch 112 or 113, respectively, causes control unit 30 to close electrically controlled left or right valve 15 or 16, respectively.

Thanks to the commands from control unit 30 causing the closing of the electrically controlled valve opposed to the pad having been actuated, it is possible to keep the fluidic connection between pump 102 and the brake corresponding to the pad having been actuated open, thereby causing braking of that brake, and to close the fluidic connection between the pump and the brake in position opposed to the pad having been actuated, thereby preventing braking of that brake.

In accordance with such an embodiment, pads 109 and 110 can also be coupled to each other, in known manner, through a lock 117, even if this is not necessary, as it will be disclosed in detail below. Preferably in such case the pads, fastened to each other, do not operate switches 112 or 113, so that electrically controlled valves 15 and 16 remain open and allow braking at least by means of both rear brakes.

As the skilled in the art can easily understand, the above configurations are operative for instance also in case of electrical blackout on the vehicle.

Actually, in case of electrical blackout on the vehicle, actuation even of a single pad actuates the pedal, the brake pump and the brakes, since rear brake valves 15 and 16, being of the normally open type, allow in any case actuating both rear brakes, thereby avoiding possible safety problems on road ways.

Of course, in case of electrical blackout during working ways, steer-by-brake SBF is no longer impossible, so that it is presumable that an electrical blackout, if any, is to be suitably signalled, for instance through a warning light supplied with power independently of the electric circuit of the vehicle.

In the preferred embodiment, a speed sensor 27 connected to control unit 30 is provided, the sensor being associated with at least one out of the left and/or right rear brakes 25, 26.

In accordance with such an embodiment, if only one of the two pads 109 or 110 is actuated and control unit 30 detects, through the at least one sensor 27, a speed higher than a predetermined speed, for instance 12 Km/h, control unit 30 keeps rear brake valves 15 and 16 open, without need for further checks, so as to allow simultaneous braking by means of at least both rear brakes 25 and 26, even if only one pad is actuated.

Of course, if electrically controlled valve 18 controlling front brakes 28 is provided, control unit 30 will keep this electrically controlled valve open, so as to cause also braking of the front brakes.

In accordance with a second embodiment, pump 102 as shown in Fig. 1, for instance of the tandem type, is replaced by a differential pump (Brake Differential Master Cylinder or MCD), connected through a branch to respective electrically controlled valves located downstream the MCD.

In such case, the differential pump also operates as pressure amplifier.

A system made in accordance with such a second embodiment allows attaining the equivalence, being the force applied, the pressure and the stroke the same, both to pads connected through a lock and to a single pad actuated with the vehicle having a speed higher than the predetermined speed.

In case of actuation of a single pad at a speed lower than or equal to the predetermined speed in order to brake only one of the rear brakes, being the force applied the same, a stroke reduction is achieved by means of the differential pump, jointly with the halving of the outlet pressure,.

Hereinafter a comparison is made by way of example between what is provided for by the prior art and what is provided for, e.g., in accordance with the first embodiment.

In accordance with the prior art, two differential pumps are provided, each having for instance:
- primary diameter: 35 mm (9.62 cm²);
- amplifying diameter: 23 mm (4.15 cm²);
- pedal ratio: 5.6
- useful stroke: 35 mm.

In case of actuation of a single pedal of one of the two pumps, by applying a load of 50 Kg to the pedal, a pressure
- 50 Kg (at the pedal) x 5.6 (pedal ratio) = 280 kg (at the pump push rod) / 9.62 cm² = 29.1 bars
   is achieved.

Such a pressure corresponds to the maximum pressure at the primary piston of the differential pump.

At the intervention pressure of the differential pump, the following pressure is achieved:
- 280 kg (at the pump push rod) / 4.15 cm² = 67.47 bars.

Such a pressure corresponds to the maximum braking pressure on one of the two brakes when 50 Kg are applied to one of the two pedals.

Of course, when the two pedals are coupled through a lock and under the same conditions (50 Kg applied to the coupled pedals), the following pressures are achieved:
- 14.55 bars (maximum pressure at the primary piston of each of the two pumps); and
- 33.73 bars (maximum braking pressure at the primary piston of each of the two pumps, at the intervention pressure of the differential pump).

In accordance for instance with the first embodiment of the present invention, and assuming:
- diameter of the master cylinder: 49.2 mm (19 cm²);
- hydraulic amplification ratio of each pressure amplifier: 4.69;
- pedal ratio: 5.6
- useful stroke: 35 mm,
in case of actuation of a single pad, by applying a load of 50 Kg to the pad, there is obtained:
- 50 Kg (at the pad) x 5.6 (pedal ratio) = 280 kg (at the pump push rod) / 19 cm² = 14.74 bars (maximum pressure at the pump primary piston)
and, at the intervention pressure of one of the two amplifiers:
- 14.74 x 4.69 = 69.13 bars, corresponding to the maximum braking pressure when a load of 50 Kg is applied to the pad and hence to the pedal.

If the two pads are coupled through a lock, under the same conditions there is still obtained:
- 14.74 bars (maximum pressure at the primary piston) and
- 69.13 bars (maximum braking pressure, when 50 Kg are applied to the coupled pads).

As it can be readily understood, if the load on the pads does not change, also the maximum braking pressure does not change.

Such a condition does not change even in case the vehicle speed exceeds a predetermined speed, for instance 12 Km/h, and a single pad is actuated.

The example applied to one of the embodiments described clearly shows that the system in accordance with the present invention allows attaining, by means of a single pedal and two pads, results corresponding to those attainable by means of two pedals and two pumps, for instance differential pumps, as usually provided for in agricultural vehicles and the like.

The operation of the system described hitherto is as follows.

In case of working ways, in which the vehicle speed is presumably lower than a speed possible in case of road ways, actuation of one of the two pads 109 or 110 enables braking of one of rear brakes 25 or 26 located in a position corresponding to that of the pad having been actuated, thanks to the intervention of control unit 30 which cuts off the fluidic connection between pump 102 and valve 15 or 16 opposed to the pad having been actuated.

If front brake valve 18 controlled by control unit 30 is provided, in case of actuation of a single pad during working ways the control unit provides for cutting off the fluidic connection between pedal 101 and front brakes 28, so that the latter are not blocked.

In case of road ways, since control unit 30 is configured so as to keep the vehicle speed under control through sensor 27, if the vehicle speed exceeds a predetermined speed actuation of only one pad 109 or 110 is handled as the actuation of both pads, so that pump 102 actuates at least both rear brakes and also front brakes 28, if the latter are provided.

The above description makes it apparent that the system allows controlling the behaviour of the vehicle brakes, while utilising only one brake pedal, by taking into account the vehicle speed, independently of whether or not the brake actuation pads are coupled together through lock 117.

The above description makes it also apparent that the system does not require valves for balancing the pressures at the rear wheels, since the braking actuation pressure always comes from a single source, both in case of a conventional pump with single or double circuit, and in case of a differential pump with single or double circuit.

Of course, obvious modifications and/or variations to the above description in respect of the size, the shapes, the materials and the components, as well as in respect of the details of the illustrated construction and the operating manner, are possible without departing from the invention as defined in the following claims.

## Claims

1. A hydraulic braking control system for agricultural vehicles or the like comprising:
- a brake pump (102) actuatable by means of one pedal (101);
- at least one first rear brake or left brake (25) and at least one second rear brake or right brake (26) arranged to be actuated by said brake pump (102); said brake pump being connected to said rear brakes (25, 26) through a branch and a pair of respective valves (15, 16), wherein said respective valves (15, 16) are of the normally open type and are configured for being selectively closed in order to control the selective braking of said rear brakes (25, 26);
- a pair of pads (109, 110), a right pad and a left pad, which are articulated on a rocker arm (111) fastened to the pedal (101), whereby the actuation of both pads (109, 110) is arranged to keep both valves (15, 16) open and cause braking of both rear brakes (25, 26), and whereby the actuation of one of the two pads (109, 110) is arranged to close, under the control of a control unit (30), the valve (15, 16) opposed to the pad having been actuated and cause braking of the rear brake (25, 26) corresponding to the pad (109, 110) having been actuated, the system being **characterized in that** in case of blackout of the control unit (30), the actuation of one of the two pads (109, 110) is arranged to keep both valves (15, 16) open and cause braking of both rear brakes (25, 26).

2. The system according to claim 1, wherein said pump is a differential pump.

3. The system according to claim 1, wherein said pump is a tandem pump and said branch is connected to a pair of respective pressure amplifiers (105, 106), respectively connected to each of said two valves (15, 16).

4. The system according to any one of claims 1 to 3, wherein each pad is arranged to operate a respective switch (112, 113) connected to said control unit (30) for controlling the selective closing of one of said two valves (15, 16) under the control of said control unit (30).

5. The system according to any one of claims 1 to 4, further comprising:
- a speed sensor (27) associated with at least one of the rear brakes (25, 26) and connected to the control unit (30), said control unit being arranged to disable the selective closing of said valves (15, 16) when the vehicle speed detected by said speed sensor (27) exceeds a predetermined value.

6. The system according to any one of claims 1 to 4, further comprising:
- a left and a right front brake (28) arranged to be actuated by said brake pump (102), the brake pump (102) being connected to said left and right front brakes (28) through a front brake valve (18), wherein said front brake valve (18) is of the normally open type and is arranged to be closed, under the control of the control unit (30), in case of actuation of only one of the two pads (109, 110)

7. The system according to claim 6, further comprising:
- a speed sensor (27) associated with at least one of the rear brakes (25, 26) and connected to the control unit (30), said control unit being arranged to disable the selective closing of said valves (15, 16) and the closing of said front brake valve (18) when the vehicle speed detected by said speed sensor (27) exceeds a predetermined value.

8. A method of controlling a braking system for agricultural vehicles or the like, comprising the steps of
- providing a brake pump (102) actuatable by means of one pedal (101);
- providing at least one first rear brake or left brake (25) and at least one second rear brake or right brake (26), which brakes are actuatable by said pump;
- providing, between the brake pump and said first rear brake, a first valve (15), which is a normally open valve and is controllable for being selectively closed by means of a control unit (30);
- providing, between the brake pump and said second rear brake, a second valve (16), which is a normally open valve and is controllable for being selectively closed by means of the control unit (30);
- providing a pair of pads (109, 110), a right pad and a left pad, arranged to selectively or jointly actuate said pedal (101);
- providing for the actuation of both pads (019, 110) being arranged to keep both valves (15, 16) open and to cause braking of both rear brakes;
- providing for the actuation of one of the two pads (109, 110) being arranged either to close the valve (15, 16) opposed to the pad having been actuated and to cause braking of the rear brake (25, 26) corresponding to the pad (109, 110) having been actuated; in case of blackout of the control unit, providing for the braking of both rear brakes.

9. The method according to claim 8, comprising the further step of:
- providing a speed sensor (27) associated with at least one of the rear brakes (25, 26) and connected to the control unit (30) in order to allow disabling the selective closing of said valves (15, 16) when the vehicle speed exceeds a predetermined value.

10. The method according to claim 8, comprising the further step of:
- providing a left and a right front brake (28) actuatable by said brake pump (102);
- providing, between the brake pump (102) and said left and right rear brake, a front brake valve (18), which is a normally open valve and is controllable for being closed by means of the control unit (30);
- providing for the actuation of one of the two pads (109, 110) being arranged either to close the front brake valve (18) or, in the alternative, in case of blackout of the control unit, to cause braking of said left and right front brakes (28)

11. The method according to claim 10, comprising the further step of:
- providing a speed sensor (27) associated with at least one of the rear brakes (25, 26) and connected to the control unit (30) in order to allow disabling the selective closing of said valves (15, 16) and the closing of said front brake valve (18) when the vehicle speed exceeds a predetermined value.

12. The method according to any one of claims 8 to 11, comprising the further step of:
- providing a lock (117) for coupling said pads together so that the actuation of the pads coupled together is arranged to cause braking of both rear brakes independently of the provision of said control unit (30).

13. The method according to any one of claims 8 to 12, wherein the step of providing a brake pump (102) actuatable by means of one pedal (101) includes the step of activating the braking pressure on said first and second rear brakes (25, 26) starting from a single source.

## Patentansprüche

1. Hydraulisches Bremssteuerungssystem für landwirtschaftliche Fahrzeuge oder dergleichen, das Folgendes umfasst:
- eine Bremspumpe (102), mittels eines Pedals (101) betätigbar;
- zumindest eine erste hintere Bremse oder linke Bremse (25) und zumindest eine zweite hintere Bremse oder rechte Bremse (26), angeordnet, um durch die Bremspumpe (102) betätigt zu werden; wobei die Bremspumpe mit den hinteren Bremsen (25, 26) über eine Verzweigung und ein Paar entsprechender Ventile (15, 16) verbunden ist, wobei die entsprechenden Ventile (15, 16) vom im Ruhezustand offenen Typ sind und dazu ausgelegt sind, gezielt geschlossen zu werden, um das gezielte Bremsen der hinteren Bremsen (25, 26) zu steuern;
- ein Paar Platten (109, 110), eine rechte Platte und eine linke Platte, die an einem am Pedal (101) befestigten Schwinghebel (111) angelenkt sind, wobei die Betätigung beider Platten (109, 110) angeordnet ist, um beide Ventile (15, 16) offen zu halten und ein Bremsen der beiden hinteren Bremsen (25, 26) zu veranlassen, und wobei die Betätigung einer der zwei Platten (109, 110) angeordnet ist, um, unter Steuerung einer Steuereinheit (30), das Ventil (15, 16) zu schließen, das der Platte, die betätigt wurde, gegenüberliegt, und ein Bremsen der hinteren Bremse (25, 26) zu veranlassen, die der Platte (109, 110), die betätigt wurde, entspricht, wobei das System **dadurch gekennzeichnet ist, dass** bei einem Ausfall der Steuereinheit (30) die Betätigung von einer der zwei Platten (109, 110) angeordnet ist, um beide Ventile (15, 16) offen zu halten und ein Bremsen der beiden hinteren Bremsen (25, 26) zu veranlassen.

2. System nach Anspruch 1, wobei die Pumpe eine Differenzialpumpe ist.

3. System nach Anspruch 1, wobei die Pumpe eine Tandempumpe ist und die Verzweigung mit einem Paar entsprechender Druckverstärker (105, 106) verbunden ist, die jeweils mit einem der zwei Ventile (15, 16) verbunden sind.

4. System nach einem der Ansprüche 1 bis 3, wobei jede Platte angeordnet ist, um einen entsprechenden Schalter (112, 113), der mit der Steuereinheit (30) verbunden ist, zu betreiben zum Steuern des gezielten Schließens von einem der zwei Ventile (15, 16) unter der Steuerung der Steuereinheit (30).

5. System nach einem der Ansprüche 1 bis 4, das ferner Folgendes umfasst:
- einen Geschwindigkeitssensor (27) in Verbindung mit zumindest einer der hinteren Bremsen (25, 26) und verbunden mit der Steuereinheit (30), wobei die Steuereinheit dazu angeordnet ist, das gezielte Schließen der Ventile (15, 16) zu deaktivieren, wenn die durch den Geschwindigkeitssensor (27) detektierte Fahrzeuggeschwindigkeit einen vorbestimmten Wert überschreitet.

6. System nach einem der Ansprüche 1 bis 4, das ferner Folgendes umfasst:
- eine linke und eine rechte vordere Bremse (28), angeordnet, um durch die Bremspumpe (102) betätigt zu werden, wobei die Bremspumpe (102) mit der linken und der rechten vorderen Bremse (28) über ein vorderes Bremsventil (18) verbunden ist, wobei das vordere Bremsventil (18) vom im Ruhezustand offenen Typ ist und angeordnet ist, um, unter der Steuerung der Steuereinheit (30), in einem Fall einer Betätigung nur einer der zwei Platten (109, 110), geschlossen zu werden.

7. System nach Anspruch 6, das ferner Folgendes umfasst:
- einen Geschwindigkeitssensor (27) in Verbindung mit zumindest einer der hinteren Bremsen (25, 26) und verbunden mit der Steuereinheit (30), wobei die Steuereinheit dazu angeordnet ist, das gezielte Schließen der Ventile (15, 16) und das Schließen des vorderen Bremsventils (18) zu deaktivieren, wenn die durch den Geschwindigkeitssensor (27) detektierte Fahrzeuggeschwindigkeit einen vorbestimmten Wert überschreitet.

8. Verfahren zur Steuerung eines Bremssystems für landwirtschaftliche Fahrzeuge oder dergleichen, das die folgenden Schritte umfasst:
- Bereitstellen einer Bremspumpe (102), mittels eines Pedals (101) betätigbar;
- Bereitstellen zumindest einer ersten hinteren Bremse oder linken Bremse (25) und zumindest einer zweiten hinteren Bremse oder rechten Bremse (26), wobei die Bremsen durch die Pumpe betätigbar sind;
- Bereitstellen, zwischen der Bremspumpe und der ersten hinteren Bremse, eines ersten Ventils (15), das ein im Ruhezustand offenes Ventil ist und steuerbar ist, um mittels einer Steuereinheit (30) gezielt geschlossen zu werden;
- Bereitstellen, zwischen der Bremspumpe und der zweiten hinteren Bremse, eines zweiten Ventils (16), das ein im Ruhezustand offenes Ventil ist und steuerbar ist, um mittels der Steuereinheit (30) gezielt geschlossen zu werden;
- Bereitstellen eines Paares Platten (109, 110), einer rechten Platte und einer linken Platte, angeordnet, um gezielt oder gemeinsam das Pedal (101) zu betätigen;
- Bereitstellen der Betätigung beider Platten (019, 110), die angeordnet sind, um beide Ventile (15, 16) offen zu halten und ein Bremsen der beiden hinteren Bremsen zu veranlassen;
- Bereitstellen der Betätigung einer der zwei Platten (109, 110), die angeordnet sind, um entweder das Ventil (15, 16) zu schließen, das der Platte, die betätigt wurde, gegenüberliegt, und ein Bremsen der hinteren Bremse (25, 26) zu veranlassen, die der Platte (109, 110) entspricht, die betätigt wurde;
bei einem Ausfall der Steuereinheit, Bereitstellen des Bremsens der beiden hinteren Bremsen.

9. Verfahren nach Anspruch 8, das ferner die folgenden Schritte umfasst:
- Bereitstellen eines Geschwindigkeitssensors (27) in Verbindung mit zumindest einer der hinteren Bremsen (25, 26) und verbunden mit der Steuereinheit (30), um ein Deaktivieren des gezielten Schließens der Ventile (15, 16) zu ermöglichen, wenn die Fahrzeuggeschwindigkeit einen vorbestimmten Wert überschreitet.

10. Verfahren nach Anspruch 8, das ferner die folgenden Schritte umfasst:
- Bereitstellen einer linken und einer rechten vorderen Bremse (28), die durch die Bremspumpe (102) betätigbar ist;
- Bereitstellen, zwischen der Bremspumpe (102) und der linken und rechten hinteren Bremse, eines vorderen Bremsventils (18), das ein im Ruhezustand offenes Ventil ist und steuerbar ist, um mittels der Steuereinheit (30) geschlossen zu werden;
- Bereitstellen der Betätigung einer der zwei Platten (109, 110), die angeordnet sind, um entweder das vordere Bremsventil (18) zu schließen oder, in der Alternative, bei einem Ausfall der Steuereinheit, ein Bremsen der linken und der rechten vorderen Bremsen (28) zu veranlassen.

11. Verfahren nach Anspruch 10, das ferner die folgenden Schritte umfasst:
- Bereitstellen eines Geschwindigkeitssensors (27) in Verbindung mit zumindest einer der hinteren Bremsen (25, 26) und verbunden mit der Steuereinheit (30), um ein Deaktivieren des gezielten Schließens der Ventile (15, 16) und des Schließens des vorderen Bremsventils (18) zu ermöglichen, wenn die Fahrzeuggeschwindigkeit einen vorbestimmten Wert überschreitet.

12. Verfahren nach einem der Ansprüche 8 bis 11, das ferner den folgenden Schritt umfasst:
- Bereitstellen einer Verriegelung (117) zum Zusammenkoppeln der Platten, sodass die Betätigung der zusammengekoppelten Platten angeordnet ist, um ein Bremsen der beiden hinteren Bremsen unabhängig von der Bereitstellung der Steuereinheit (30) zu veranlassen.

13. Verfahren nach einem der Ansprüche 8 bis 12, wobei der Schritt des Bereitstellens einer Bremspumpe (102), die mittels eines Pedals (101) betätigbar ist, den Schritt des Aktivierens des Bremsdrucks an der ersten und an der zweiten hinteren Bremse (25, 26), beginnend bei einer einzelnen Quelle, umfasst.

## Revendications

1. Système de commande de freinage hydraulique pour véhicules agricoles ou similaires comprenant :
une pompe de frein (102) pouvant être actionnée au moyen d'une pédale (101) ;
au moins un premier frein arrière ou frein gauche (25) et au moins un second frein arrière ou frein droit (26) conçus pour être actionnés par ladite pompe de frein (102) ; ladite pompe de frein étant reliée auxdits freins arrière (25, 26) par le biais d'un raccordement et d'une paire de soupapes (15, 16) respectives, lesdites soupapes (15, 16) respectives étant du type normalement ouvert et étant conçues pour être fermées de manière sélective afin de commander le freinage sélectif desdits freins arrière (25, 26) ;
une paire de plaquettes (109, 110), une plaquette droite et une plaquette gauche, qui sont articulées sur un culbuteur (111) fixé à la pédale (101), moyennant quoi l'actionnement des deux plaquettes (109, 110) est conçu pour maintenir les deux soupapes (15, 16) ouvertes et provoquer le freinage des deux freins arrière (25, 26), et moyennant quoi l'actionnement d'une des deux plaquettes (109, 110) est conçu pour fermer, sous la commande d'une unité de commande (30), la soupape (15, 16) opposée à la plaquette ayant été actionnée et provoquer le freinage du frein arrière (25, 26) correspondant à la plaquette (109, 110) ayant été actionnée, le système étant **caractérisé en ce qu'**en cas de panne de l'unité de commande (30), l'actionnement d'une des deux plaquettes (109, 110) est conçu pour maintenir les deux soupapes (15, 16) ouvertes et provoquer le freinage des deux freins arrière (25, 26).

2. Système selon la revendication 1, ladite pompe étant une pompe différentielle.

3. Système selon la revendication 1, ladite pompe étant une pompe en tandem et ledit raccordement étant relié à une paire d'amplificateurs de pression (105, 106) respectifs, respectivement reliés à chacune desdites deux soupapes (15, 16).

4. Système selon l'une quelconque des revendications 1 à 3, chaque plaquette étant conçue pour actionner un commutateur (112, 113) respectif relié à ladite unité de commande (30) pour commander la fermeture sélective de l'une desdites deux soupapes (15, 16) sous la commande de ladite unité de commande (30).

5. Système selon l'une quelconque des revendications 1 à 4, comprenant en outre :
un capteur de vitesse (27) associé à au moins un des freins arrière (25, 26) et relié à l'unité de commande (30), ladite unité de commande étant conçue pour désactiver la fermeture sélective desdites soupapes (15, 16) lorsque la vitesse de véhicule détectée par ledit capteur de vitesse (27) dépasse une valeur prédéfinie.

6. Système selon l'une quelconque des revendications 1 à 4, comprenant en outre :
des freins avant gauche et droit (28) conçus pour être actionnés par ladite pompe de frein (102), la pompe de frein (102) étant reliée auxdits freins avant gauche et droit (28) par l'intermédiaire d'une soupape de frein avant (18), ladite soupape de frein avant (18) étant du type normalement ouvert et étant conçue pour être fermée, sous la commande de l'unité de commande (30), en cas d'actionnement d'une seule des deux plaquettes (109, 110).

7. Système selon la revendication 6, comprenant en outre :
un capteur de vitesse (27) associé à au moins un des freins arrière (25, 26) et relié à l'unité de commande (30), ladite unité de commande étant conçue pour désactiver la fermeture sélective desdites soupapes (15, 16) et la fermeture de ladite soupape de frein avant (18) lorsque la vitesse de véhicule détectée par ledit capteur de vitesse (27) dépasse une valeur prédéfinie.

8. Procédé de commande d'un système de freinage pour véhicules agricoles ou similaires, comprenant les étapes consistant à
fournir une pompe de frein (102) pouvant être actionnée au moyen d'une pédale (101) ;
fournir au moins un premier frein arrière ou frein gauche (25) et au moins un second frein arrière ou frein droit (26), lesquels freins peuvent être actionnés par ladite pompe ;
fournir, entre la pompe de frein et ledit premier frein arrière, une première soupape (15), qui est une soupape normalement ouverte et peut être commandée pour être fermée de manière sélective au moyen d'une unité de commande (30) ;
fournir, entre la pompe de frein et ledit second frein arrière, une seconde soupape (16), qui est une soupape normalement ouverte et peut être commandée pour être fermée de manière sélective au moyen de l'unité de commande (30) ;
fournir une paire de plaquettes (109, 110), une plaquette droite et une plaquette gauche, disposées de sorte à actionner de manière sélective ou conjointe ladite pédale (101) ;
permettre l'actionnement des deux plaquettes (019, 110) disposées de sorte à maintenir les deux soupapes (15, 16) ouvertes et à provoquer le freinage des deux freins arrière ;
permettre l'actionnement d'une des deux plaquettes (109, 110) disposées soit pour fermer la soupape (15, 16) opposée à la plaquette ayant été actionnée, et pour provoquer le freinage du frein arrière (25, 26) correspondant à la plaquette (109, 110) ayant été actionnée ;
en cas d'arrêt de l'unité de commande, permettre le freinage des deux freins arrière.

9. Procédé selon la revendication 8, comprenant en outre l'étape consistant à :
fournir un capteur de vitesse (27) associé à au moins un des freins arrière (25, 26) et relié à l'unité de commande (30) afin de permettre de désactiver la fermeture sélective desdites soupapes (15, 16) lorsque la vitesse de véhicule dépasse une valeur prédéfinie.

10. Procédé selon la revendication 8, comprenant en outre les étapes consistant à :
fournir un frein avant gauche et un frein avant droit (28) pouvant être actionnés par ladite pompe de frein (102) ;
fournir, entre la pompe de frein (102) et lesdits freins arrière gauche et droit, une soupape de frein avant (18), qui est une soupape normalement ouverte et dont la fermeture peut être commandée au moyen de l'unité de commande (30) ;
permettre l'actionnement d'une des deux plaquettes (109, 110) disposées soit pour fermer la soupape de frein avant (18) soit, en variante, en cas d'arrêt de l'unité de commande, pour provoquer le freinage desdits freins avant gauche et droit (28).

11. Procédé selon la revendication 10, comprenant en outre l'étape consistant à :
fournir un capteur de vitesse (27) associé à au moins un des freins arrière (25, 26) et relié à l'unité de commande (30) afin de permettre de désactiver la fermeture sélective desdites soupapes (15, 16) et la fermeture de ladite soupape de frein avant (18) lorsque la vitesse de véhicule dépasse une valeur prédéfinie.

12. Procédé selon l'une quelconque des revendications 8 à 11, comprenant en outre l'étape consistant à :
fournir un verrou (117) pour accoupler lesdites plaquettes ensemble de sorte que l'actionnement des plaquettes accouplées ensemble soit conçu pour provoquer le freinage des deux freins arrière indépendamment de la fourniture de ladite unité de commande (30).

13. Procédé selon l'une quelconque des revendications 8 à 12, l'étape de fourniture d'une pompe de frein (102) pouvant être actionnée au moyen d'une pédale (101) comprenant l'étape consistant à activer la pression de freinage sur lesdits premier et second freins arrière (25, 26) en partant d'une source unique.
